# EUROPEAN PATENT APPLICATION

(11) **EP 2 076 028 A2**
(43) Date of publication of application: **01.07.2009**
(21) Application number: 08171975.9
(22) Date of filing: 17.12.2008
(51) Int. Cl.: H04N 5/44

(54) **Television system and remote controller**

(30) Priority: 28.12.2007 JP 2007339857
(71) Applicant: Fujitsu Ltd., Kawasaki-shi, Kanagawa 211-8588 (JP)
(72) Inventor: Haijima, Shoichi, Kanagawa 211-8588 (JP); Isobe, Yasuhiko, Kanagawa 211-8588 (JP); Kogure, Takashi, Kanagawa 211-8588 (JP); Taguchi, Hiroyuki, Kanagawa 211-8588 (JP); Kimura, Youji, Kanagawa 211-8588 (JP)
(74) Representative: Holtby, Christopher Lawrence

(57) **Abstract**

A TVPC 10 accumulates history information that has information indicating a channel viewed by a user and viewing time of the channel in a way that associates the information and the viewing time, and generates, based on the history information, preset information indicating any one of channels. The preset information is registered in a remote controller 20 for remotely operating a television receiver 30. When an instruction to tune on a power supply of the television receiver 30 is received from an operator, the remote controller 20 transmits an operation signal for designating the channel specified by the preset information 21 to the television receiver 30 together with an operation signal for designating switching of a power supply state.

## Description

### FIELD

The embodiments discussed herein are related to a television system that provides a user with a function for remotely operating a television receiver.

### BACKGROUND

As it is well known, a general television receiver is operated through a remote controller. Most basic operations for a television receiver include turn-on and turn-off of a power supply, volume control, and switching of a channel. Most remote controllers include at least buttons for performing these basic operations. When a button is depressed, the remote controller outputs an operation signal corresponding to the button. When the operation signal is received from the remote controller, the television receiver controls the power supply, volume, and tuning according to the operation signal.

In this way, the television receiver serves as an interface for directly receiving operation from a user via the remote controller. Therefore, the television receiver can be seemingly used as an apparatus for accumulating a viewing history of the user and extracting channels with high tendencies of viewing based on the viewing history.

However, since the television receiver is often used by a plurality of users, the viewing history needs to be accumulated and managed for each of the users. Therefore, when it is attempted to realize the accumulation of the viewing history in the television receiver, operation for selecting a user is necessary before original operation for the television receiver is performed. As a result, it is conceivable that operation becomes complicated.

Even if the accumulation of the viewing history can be realized in the television receiver, preference information indicating channels with high tendencies of viewing cannot be extracted from the television receiver or input to the television receiver without intermediation of some input/output interface. Such an input/output interface is not provided in conventional television receivers, and therefore, it is highly likely that the preference information is not information that can be provided to other television receivers.
[Patent document 1] Japanese Laid-open Patent publication No. 2007-134947
[Patent document 2] Japanese Laid-open Patent publication No. 2005-109924
[Patent document 3] Japanese Laid-open Patent publication No. 10-336535

### SUMMARY

The embodiments discussed herein have been devised in view of the circumstances as described above, and it is therefore a purpose of embodiments of the invention to make it possible to use, in any television receiver, preference information indicating channels with high tendencies of viewing by a user.

A first aspect of a television system devised to achieve the purpose described above includes an apparatus and a remote controller. The apparatus includes: a receiving unit that receives a television signal of any one of channels; an output unit that outputs audio-visual based on the television signal received by the receiving unit; a switching unit that switches a channel of the television signal received by the receiving unit when an instruction to switch a channel is accepted from an operator; a recording unit that records history information that has viewing time during which the output unit outputs audio-visual of the channel and channel information indicating the channel in a way that associates the viewing time and the channel information; and a generating unit that generates, based on the history information recorded by the recording unit, preference information indicating any one of the channels. The remote controller includes: a receiving unit that receives the preference information from the apparatus; and a transmitting unit that transmits, when predetermined operation is received from the operator, an operation signal for designating the channel specified by the preference information received by the receiving unit to a television receiver.

Also, a second aspect of the television system devised to achieve the purpose described above includes an apparatus and a remote controller. The apparatus includes: a receiving unit that receives a television signal of any one of channels; an output unit that outputs audio-visual based on the television signal received by the receiving unit; a switching unit that switches a channel of the television signal received by the receiving unit when an instruction to switch a channel is accepted from an operator; a recording unit that records, for each of the channels, the number of times of being tuned in about the channel as history information; and a generating unit that generates, based on the history information recorded by the recording unit, preference information indicating any one of the channels. The remote controller includes: a receiving unit that receives the preference information from the apparatus; and a transmitting unit that transmits, when predetermined operation is received from the operator, an operation signal for designating the channel specified by the preference information received by the receiving unit to a television receiver.

According to the first and second aspects, preference information indicating any one of channels is generated by an apparatus that records history information and passed from the apparatus to a remote controller. The remote controller outputs an operation signal based on the preference information. This operation signal is an operation signal that can be received by any television receiver. Therefore, with the remote controller including in the first and second aspects, the preference information can be used in any television receiver. Therefore, a new input/output interface is not necessary for the television receiver.

A third aspect of the television system devised to achieve the purpose described above is includes an apparatus and a remote controller. The apparatus includes: a receiving unit that receives a television signal of any one of channels; an output unit that outputs audio-visual based on the television signal received by the receiving unit; a switching unit that switches a channel of the television signal received by the receiving unit when an instruction to switch a channel is accepted from an operator; a recording unit that records history information that has viewing time during which the output unit outputs sound and videos of the channel and channel information indicating the channel in a way that associates the viewing time and channel information; and a generating unit that generates, based on the history information recorded by the recording unit, preference information indicating a channel for each of several time frames among one or more time frames obtained by dividing time in one day. The remote controller includes: a receiving unit that receives the preference information from the apparatus; a specifying unit that specifies, when predetermined operation is received from the operator, a channel based on the preference information received by the receiving unit and time at that point; and a transmitting unit that transmits an operation signal for designating the channel specified by the specifying unit to a television receiver.

According to the third aspect, preference information indicating a channel for each of several time frames within one day is generated by an apparatus that records history information and passed from the apparatus to a remote controller. The remote controller outputs an operation signal based on the preference information and an operation time. This operation signal is an operation signal that can be received by any television receiver. Therefore, with the remote controller, the preference information can be used in any television receiver. Therefore, a new input/output interface is not necessary for the television receiver.

The apparatus in the television system according to the first through third aspects disclosed above may be a television receiver including the respective units of the apparatus or may be a computer installed with software for causing the computer to execute steps that realize functions equivalent to the respective units.

A first aspect of a remote controller devised to achieve the purpose described above includes: a receiving unit that receives preference information indicating any one of channels; and a transmitting unit that transmits, when predetermined operation is received from an operator, an operation signal for designating the channel specified by the preference information received by the receiving unit to the television receiver.

Therefore, this remote controller works as a device equivalent to the remote controller included in the television system according to the first and second aspects described above.

A second aspect of the remote controller devised to achieve the purpose described above includes: a receiving unit that receives preference information indicating a channel for each of several time frames among one or more time frames obtained by dividing time in one day; a specifying unit that specifies, when predetermined operation is received from an operator, a channel based on the preference information received by the receiving unit and time at that point; and a transmitting unit that transmits an operation signal for designating the channel specified by the specifying unit to a television receiver.

Therefore, this remote controller works as a device equivalent to the remote controller included in the television system according to the third aspect described above.

Accordingly, with the television system and the remote controller disclosed herein, preference information indicating channels with high tendencies of viewing by a user can be used in any television receiver.

The purpose and advantages of the embodiments may be realized and attained by means of the elements and combinations particularly pointed out in the claims.

It is to be understood that both the foregoing general description and the following detailed description are exemplary and explanatory and are not restrictive of the embodiments, as claimed.

### BRIEF DESCRIPTION OF DRAWINGS

[FIG. 1] A diagram schematically illustrating a configuration of a television system according to a first embodiment.
[FIG. 2] A block diagram schematically illustrating a configuration of a personal computer with a television function.
[FIG. 3] A block diagram schematically illustrating a configuration of Television software.
[FIG. 4] A block diagram schematically illustrating a configuration of a remote controller.
[FIG. 5] A flowchart illustrating a setting processing.
[FIG. 6] A flowchart illustrating a preset information control processing.
[FIG. 7] A flowchart illustrating a channel switching processing.
[FIG. 8] A block diagram schematically illustrating a configuration of Television software according to a second embodiment.
[FIG. 9] A flowchart illustrating a setting processing.
[FIG. 10] A block diagram schematically illustrating a configuration of a remote controller according to a third embodiment.
[FIG. 11] A block diagram schematically illustrating a configuration of Television software according to a fourth embodiment.
[FIG. 12] A block diagram schematically illustrating a configuration of a remote controller according to a fourth embodiment.
[FIG. 13] A flowchart illustrating a setting processing.
[FIG. 14] A flowchart illustrating a time frame table receiving processing.
[FIG. 15] A flowchart illustrating a channel switching processing.

### DESCRIPTION OF EMBODIMENTS

Four embodiments of the television system and the remote controller disclosed above will hereinafter be described with reference to the attached drawings.

### FIRST EMBODIMENT

### <Configuration>

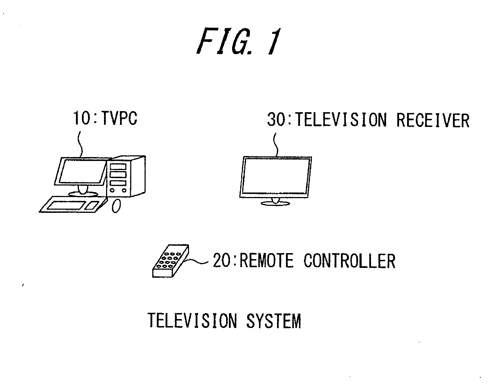

Fig. 1 is a diagram schematically illustrating a configuration of a television system according to a first embodiment.

As illustrated in Fig. 1, the television system according to the first embodiment includes a personal computer with a television function (hereinafter, abbreviated as TVPC) 10, a remote controller 20, and a television receiver 30.

The TVPC 10 is a personal computer added with a television function of viewing and recording broadcasted TV programs. The remote controller 20 is a device that remotely operates the television receiver 30 and is a so-called TV remote control. The television receiver 30 is an apparatus that receives television signals of a plurality of channels from the outside, tunes in to viewing target television signal, and outputs audio-visual based on the tuned television signal. This television receiver 30 is a general television receiver and performs turn-on and turn-off of a power supply, volume control, and switching of a channel based on an operation signal output in a form of an infrared ray from the remote controller 20.

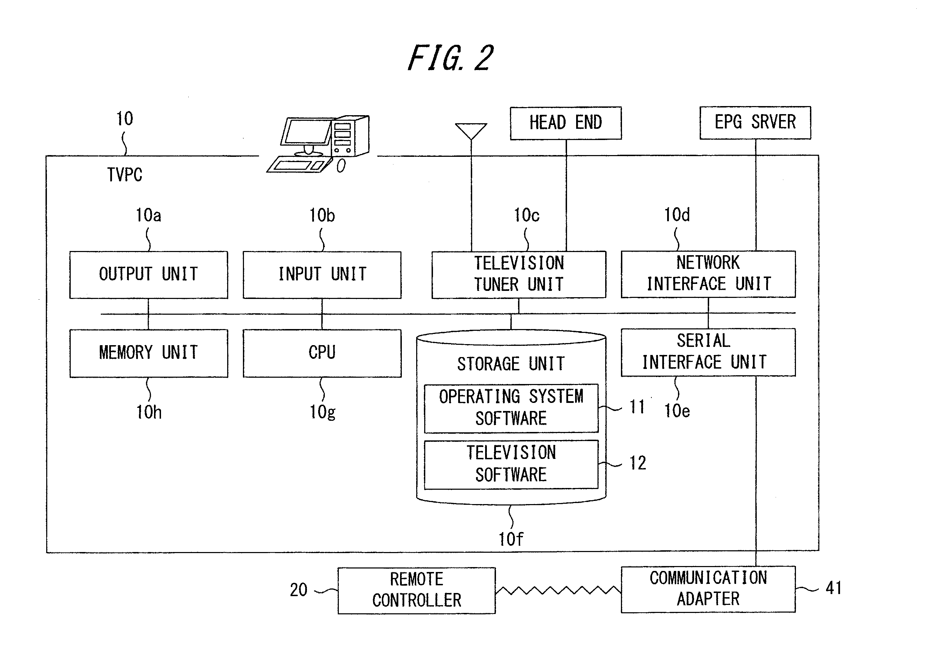

Fig. 2 is a block diagram schematically illustrating a configuration of the TVPC 10.

As illustrated in Fig. 2, the TVPC 10 includes an output unit 10a such as a liquid crystal display with speakers, an input unit 10b such as a keyboard and a mouse, and a main body to which these units 10a and 10b are connected. At least a television tuner unit 10c, a network interface unit 10d, a serial interface unit 10e, a storage unit 10f, a central processing unit (CPU) 10g, and a memory unit 10h are incorporated in the main body.

The television tuner unit 10c is a unit that receives television signals of a plurality of channels from a television signal transmitting apparatus (not illustrated) and a head end apparatus (not illustrated), and tunes in and digitizes television signal of viewing target channel. The television signal transmitting apparatus (not illustrated) is an apparatus that broadcasts television signals with a form of a radio wave and is set in a facility of a TV broadcasting station. The head end apparatus (not illustrated) is an apparatus that transmits television signals received from the TV broadcasting station via a community antenna to a community antenna television (CATV) network (not illustrated) and is set in a facility of a cable television broadcasting company. The television tuner unit 10c is connected to a television antenna set in a general house via a coaxial cable and connected to a repeater in the CATV network (not illustrated) via a CATV cable. This television tuner unit 10c may be a television tuner card incorporated in the main body of the TVPC 10 as a detachable expansion card or may be a television tuner box connected to a serial interface unit (not illustrated). This television tuner unit 10c may include hardware functioning as an encoder that compresses video data, which is acquired by digitizing a television signal, by converting a format of the video data into a format that is suitable for saving and is reproducible on a personal computer. As the encoder, for example, there is a moving picture experts group (MPEG) encoder. When the television tuner unit 10c is a type that does not include the hardware functioning as such an encoder, software functioning as the encoder needs to be installed in a storage unit 10f described later.

Note that this television tuner unit 10c corresponds to the receiving unit described above.

The network interface unit 10d is a unit that exchanges data with other computers on the Internet (not illustrated). As the network interface unit 10d, there are, for example, an Ethernet (trademark of Xerox Corporation in the United States) card, a fiber channel (FC) card, an asynchronous transfer mode (ATM) card, a token ring card, and a fiber-distributed data interface (FDDI) card. This network interface unit 10d is connected to a repeater in the Internet (not illustrated) via a network cable. As the repeater, there are, for example, a switching hub, a router, and an FC switch. The network interface unit 10d according to the first embodiment is connected to an electronic program guide (EPG) server apparatus via the Internet (not illustrated). The EPG server apparatus is an apparatus that provides a web client with EPG information for specifying TV programs in a week from now among TV programs scheduled to be broadcasted by respective TV broadcasting stations. When a request from a web client is received through the Internet (not illustrated), the EPG server apparatus transmits the EPG information to the web client through the Internet (not illustrated). Though not illustrated in the figure, as it is well known, the EPG information has, for each of TV programs, TV program data including at least broadcast start date and time, running time, a channel number, and a title of the TV program. Some EPG information is broadcasted from the television signal transmitting apparatus by being superimposed on a television signal as an EPG signal. The TVPC 10 may use not only the EPG information acquired from the EPG server apparatus but also EPG information received by the television tuner unit 10c.

The serial interface unit 10e is a unit that exchanges data with an external apparatus according to a serial communication protocol. As the serial communication protocol, there are, for example, universal serial bus (USB), RS-232C, personal system/2 (PS/2), and institute of electrical and electronic engineers (IEEE) 1394. This serial interface unit 10e is connected to a communication adapter 41 via a predetermined communication cable or a predetermined connector conformed to the serial communication protocol. The communication adapter 41 is a device that exchanges, with the remote controller 20, information with a form of an optical wireless or radio wave wireless. Note that a communication protocol of the optical wireless communication or the radio wave wireless communication may be a unique communication protocol or may be a general-purpose communication protocol. When the communication protocol is the unique communication protocol, an infrared ray, a visible ray, or light of other wavelengths may be used for the optical wireless communication. A low-frequency band such as a very high frequency (VHF) band or an ultra high frequency (UHF) band may be used or a highfrequency band of a microwave, a millimeter wave, or the like may be used for the radio wave wireless communication. As the general-purpose communication protocol, there are, for example, infrared data association (IrDA) and Bluetooth (trademark of Bluetooth Special Interest Group). In the first embodiment, as illustrated in Fig. 2, the serial interface unit 10e is explained as a unit separate from the communication adapter 41. However, these may be incorporated in the TVPC 10 as an integral unit. When the integral unit incorporated in the TVPC 10 performs the optical wireless communication, a window through which communication light used in the optical wireless communication passes needs to be provided in the TVPC 10.

The storage unit 10f is a unit that readably and writably records various programs and various data in a disk medium. As the storage unit 10f, there is, for example, a hard disk drive device, a digital versatile disk (DVD) drive device, a +R/+RW drive device, or a Blu-ray Disk (BD) drive device. As the disk medium, there is a hard disk, a DVD (including DVD-Recordable (DVD-R), DVD-Rewritable (DVD-RW), DVD-Read-Only-Memory (DVD-ROM), and DVD-Random-Access-Memory (DVD-RAM)), a +R/+RW, or a BD (including BD-R, BD-Rewritable (BD-RE), and BD-ROM).

The CPU 10g is a unit that performs processing according to the program stored in the storage unit 10f. The memory unit 10h is a unit that the CPU 10g uses to cache a program or data and develop a work area.

In this TVPC 10, at least operating system software 11 and television software 12 are stored in the storage unit 10f.

The operating system software 11 is software that performs provision of an application programming interface (API) and an application binary interface (ABI) to various application programs, management of storage areas of the storage unit 10f and the memory unit 10h, management of a process and a task, provision of utilities such as file management and various setting tools and editors to the application programs, and allocation of windows to a plurality of tasks that multiplex a screen output.

The television software 12 is software that adds a television function of viewing and recording a broadcasted TV program to a personal computer.

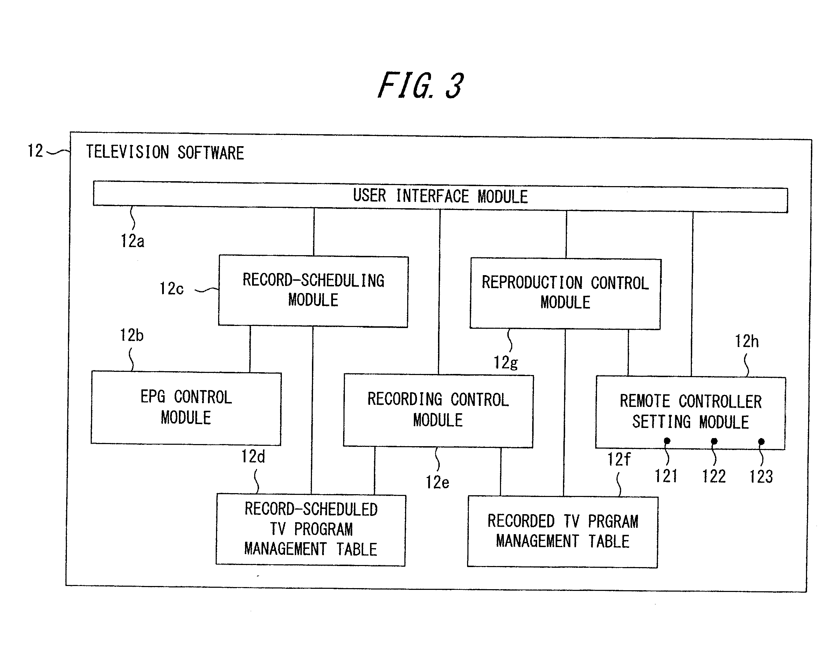

Fig. 3 is a block diagram schematically illustrating a configuration of the television software 12.

As illustrated in Fig. 3, the television software 12 includes a user interface module (program) 12a, an EPG control module (program) 12b, a record-scheduling module (program) 12c, a record-scheduled TV program management table 12d, a recording control module 12e, a recorded TV program management table 12f, a reproduction control module 12g, and a remote controller setting module 12h.

The user interface module 12a is a module that receives, from an operator via a predetermined graphical user interface (GUI), instruction to display a list of TV programs scheduled to be broadcasted, instruction to schedule recording of TV programs, instruction to display a program being broadcasted, instruction to start or stop recording of the TV program being broadcasted, instruction to reproduction a recorded TV program, and condition for automatic recording described later. The user interface module 12 instructs the record-scheduling module 12c, the recording control module 12e, or the reproduction control module 12g to perform its own processing by receiving the instruction or condition.

The EPG control module 12b is a module that acquires EPG information from the EPG server apparatus (not illustrated) when a request from the operator is received via the user interface module 12a and the record-scheduling module 12c. The EPG control module 12b may acquire, from the television tuner unit 10c, EPG information broadcasted from the television signal transmitting apparatus. When the EPG information is received from this EPG control module 12b through the record-scheduling module 12c, the user interface module 12a selectively list-displays, based on a plurality of TV program data included in the EPG information, TV programs scheduled to be broadcasted within a week on the output unit 10a.

The record-scheduling module 12c is a module that performs record-scheduling for a TV program designated by the operator via the user interface module 12a among the TV programs scheduled to be broadcasted within a week. When the record-scheduling for the TV program is received, the record-scheduling module 12c registers information related to the TV program in the record-scheduled TV program management table 12d.

The recording control module 12e is a module that executes, when start and stop of recording of a TV program being broadcasted are instructed by the operator via the user interface module 12a, the start or the stop of the recording and executes recording of the TV program (generation and storage of audio-visual data) registered in the record-scheduled TV program management table 12d. When recording is finished for a record-scheduled program, the recording control module 12e deletes a record of the TV program from the record-scheduled TV program management table 12d and adds the record of the TV program to the recorded TV program management table 12f. When recording is finished for a TV program directly instructed to be recorded from the operator, the recording control module 12e adds a record of the TV program to the recorded TV program management table 12f.

The reproduction control module 12g is a module that selectively presents the operator with information related to TV programs registered in the recorded TV program management table 12f via the user interface module 12a. The reproduction control module 12g executes reproduction of a TV program designated by the operator among the TV programs, the information of which is presented. The reproduction control module 12g is also a module that displays, on the output unit 10a, TV programs of a channel designated by the operator via the user interface module 12a among TV programs being broadcasted.

Note that this reproduction control module 12g, the encoder, and the output unit 10a corresponds to the output unit described above. This reproduction control module 12g and the user interface module 12a corresponds to the switching unit described above.

The remote controller setting module 12h is a module that generates preset information indicating any one of channels and registers the preset information in the remote controller 20 described later. This remote controller setting module 12h includes a viewing time management table 121, a measurement program 122, and a setting program 123.

The viewing time management table 121 is a table in which history information is accumulated as records, the history information having viewing time of a channel and channel information indicating the channel in a way that associates the viewing time and the channel information. After being stored for a fixed period of time, the respective records are deleted from the viewing time management table 121. Therefore, only a latest viewing history is stored in the viewing time management table 121.

The measurement program 122 is a program for measuring, when a TV program of a channel designated by the operator among TV programs broadcasted on a plurality of channels is output to the output unit 10a by the reproduction control module 12g, viewing time of the TV program, and recording the viewing time and channel information of the channel into the viewing time management table 121.

The CPU 10g that executes this measurement program 122 and the viewing time management table 121 corresponds to the recording unit described above.

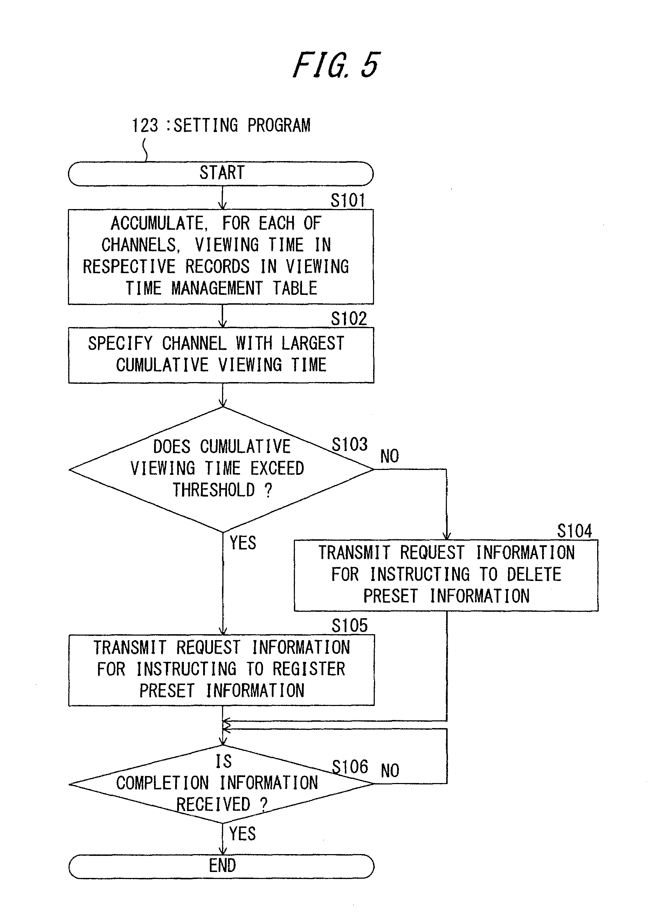

The setting program 123 is a program for generating preset information indicating any one of channels in response to an instruction from the operator and registering, into the remote controller 20 described later, the preset information as preference information indicating channels with high tendencies of viewing by the user. Details of setting processing executed by the CPU 10g according to this setting program 123 are described later with reference to Fig. 5.

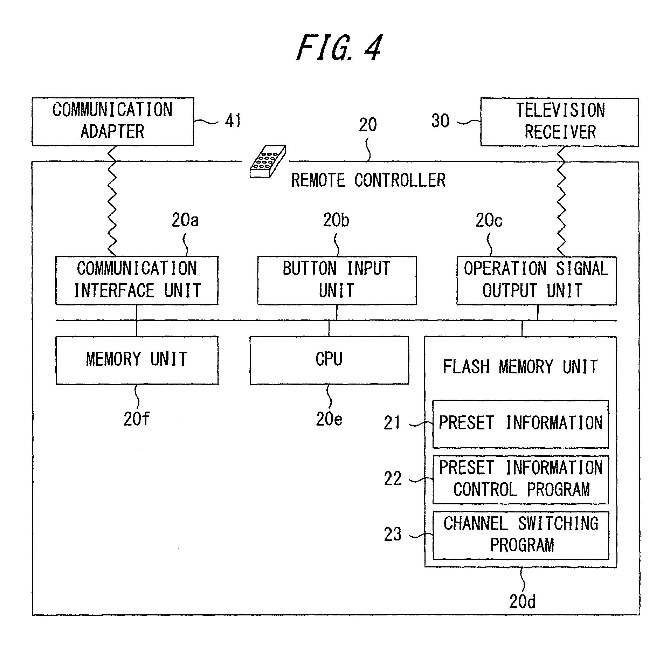

Fig. 4 is a block diagram schematically illustrating a configuration of the remote controller 20.

As illustrated in Fig. 4, the remote controller 20 includes a communication interface unit 20a, a button input unit 20b, an operation signal output unit 20c, a flash memory unit 20d, a CPU 20e, and a memory unit 20f.

The communication interface unit 20a is a unit that exchanges, with the communication adapter 41, information with a form of an optical wireless or radio wave wireless.

The button input unit 20b is a unit that detects depression of a plurality of buttons arranged on an operation surface (not illustrated) of a housing of the remote controller 20 and notifies the CPU 20e that instructions for operation corresponding to the depressed buttons are received. As most basic operation of the television receiver 30, there are turn-on and turn-off of a power supply, volume control, and switching of a channel. This button input unit 20b includes at least buttons that performs these kinds of basic operation.

The operation signal output unit 20c is a unit that outputs an operation signal, to which the CPU20e designates based on an operation instruction received in the button input unit 20b, with a form of an infrared ray. As described above, this operation signal is an operation signal that can be received by the television receiver 30.

The flash memory unit 20d is a unit that readably and writably records various programs and various data. The CPU 20e and the memory unit 20f are hardware that have functions being equivalent to functions that the CPU 10g and the memory unit 10h of the TVPC 10 have.

Preset information 21, a preset information control program 22, and a channel switching program 23 are stored in the flash memory unit 20d of the remote controller20.

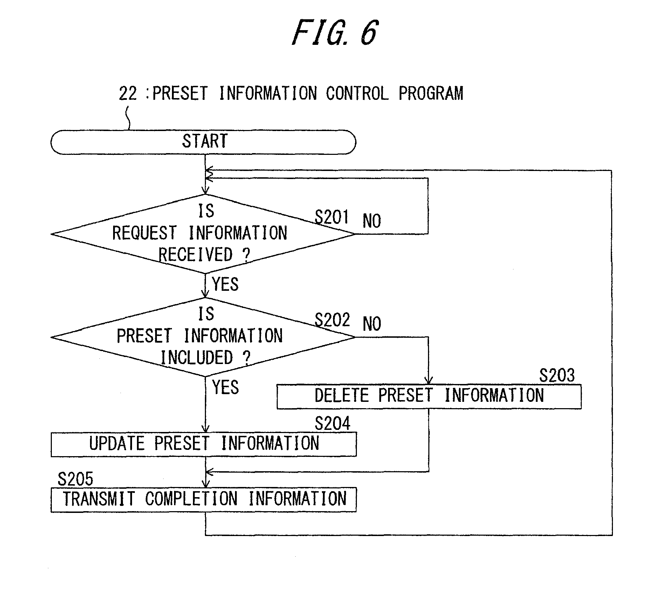

The preset information 21 is information indicating any one of channels. The preset information control program 22 is a program for registering the preset information 21 in the flash memory unit 20d and deleting the preset information 21 from the flash memory unit 20d in cooperation with the remote controller setting module 12h. Note that details of preset information control processing executed by the CPU 20e according to this preset information control program 22 are described later with reference to Fig. 6.

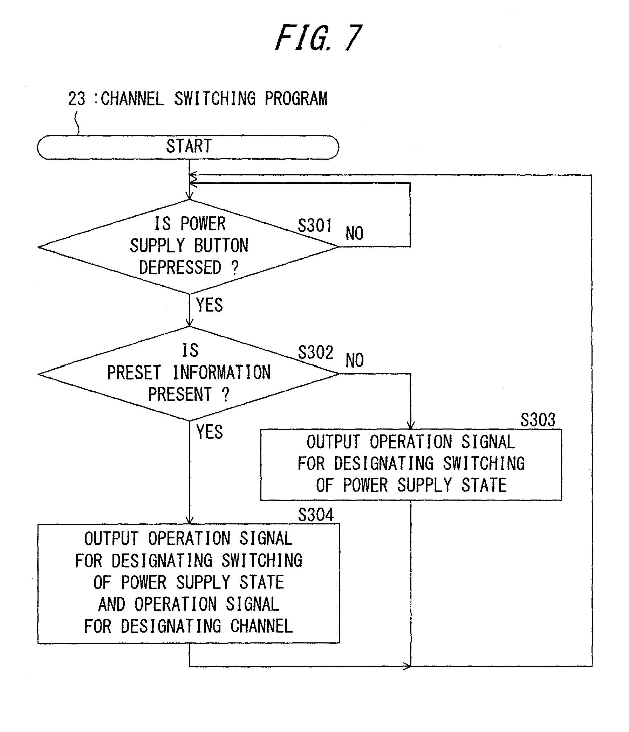

The channel switching program 23 is a program for executing, after switching of a power supply state (turn-on of power supply in power-off state) of the television receiver 30 is instructed by the operator through the button input unit 20b, judgment of propriety of switching a channel based on the instruction , and performing operation of the television receiver 30 based on the judgment. Note that details of channel switching processing executed by the CPU 20e according to this channel switching program 23 are described later with reference to Fig. 7.

### <Processing>

### (Setting processing)

The TVPC 10 illustrated in Fig. 2 includes a predetermined button (not illustrated) on a screen displayed on the output unit 10a by the user interface module 12a illustrated in Fig. 3. When the button is clicked by the operator who operates the input unit 10b, the CPU 10g runs the setting program 123 in the remote controller setting module 12h and thereby starts setting processing.

Fig. 5 is a flowchart illustrating the setting processing.

After starting the setting processing, in first step S101, the CPU 10g accumulates, for each of channels, viewing time in the respective records in the viewing time management table 121 (Fig. 3) to thereby calculate cumulative viewing time for each of the channels.

In next step S102, the CPU 10g specifies a channel, the cumulative viewing time of which is the largest, among the channels for which the cumulative viewing time is calculated in step S101.

In next step S103, the CPU 10g judges whether the cumulative viewing time of the channel specified in step S102 exceeds a predetermined threshold. When the cumulative viewing time does not exceed the predetermined threshold, the CPU 10g branches the processing from step S103 to step S104.

In step S104, the CPU 10g transmits request information for instructing to delete the preset information 21 to the remote controller 20 through the communication adapter 41. After the transmission, the CPU 10g advances the processing to step S106.

On the other hand, when the cumulative viewing time of the channel specified in step S102 exceeds the predetermined threshold in step S103, the CPU 10g advances the processing to step S105.

In step S105, the CPU 10g transmits, to the remote controller 20 through the communication adapter 41, request information for instructing to register, as preset information, channel information of the channel specified in step S102. After the transmission, the CPU 10g advances the processing to step S106.

In step S106, the CPU 10g stays on standby until completion information is received as a response to the request information from the remote controller 20, which has received the request information in steps S104 or S105, through the communication adapter 41. When the completion information is received, the CPU 10g finishes the setting processing according to Fig. 5. Note that, after receiving the completion information, the CPU 10g may display, on the output unit 10a, a dialog box for notifying the operator that the registration of the preset information in the remote controller 20 has been completed. When the completion information cannot be received within a fixed period of time after the transmission of the request information, the CPU 10g may display, on the output unit 10a, a dialog box for notifying the operator that the registration of the preset information has failed, and finish the setting processing according to Fig. 5.

### (Preset information control processing)

After a power supply for the remote controller 20 is turned on, the CPU 20e of the remote controller 20 illustrated in Fig. 4 runs the preset information control program 22 and thereby starts the preset information control processing.

Fig. 6 is flowchart illustrating the preset information control processing.

After starting the preset information control processing, in first step S201, the CPU 20e stays on standby until request information is received from the TVPC 10 via the communication interface unit 20a. When the request information is received, the CPU 20e advances the processing to step S202.

In step S202, the CPU 20e judges whether preset information is included in the request information received in step S201. When the preset information is not included in the request information, the CPU 20e branches the processing from step S202 to step S203.

In step S203, the CPU 20e performs processing for deleting the preset information 21 from the flash memory unit 20d. After the deletion, the CPU 20e advances the processing to step S205. Note that, when the preset information 21 is not recorded in the flash memory unit 20d, the CPU 20e advances the processing to step S205 without performing any processing in step S203.

On the other hand, when, in step S202, the preset information is included in the request information received in step S201, the CPU 20e advances the processing to step S204.

In step S204, the CPU 20e updates the preset information 21 in the flash memory unit 20d to the preset information included in the request information. After the update, the CPU 20e advances the processing to step S205. Note that, when the preset information 21 is not recorded in the flash memory unit 20d, in step S204, the CPU 20e performs processing for storing the preset information included in the request information in the flash memory unit 20d and then, advances the processing to step S205.

In step S205, the CPU 20e transmits completion information to the TVPC 10 via the communication interface unit 20a. After the transmission, the CPU 20e resets the processing to step S201 and thereby returns to a state of staying on standby until request information is transmitted from the TVPC 10.

According to this preset information control processing, the remote controller 20 registers the preset information 21 in the flash memory unit 20d and deletes the preset information 21 from the flash memory unit 20d in cooperation with the setting program 123 (Fig. 5) in the remote controller setting module 12h of the TVPC 10.

Note that the CPU 20e that executes this preset information control program 22 and the communication interface unit 20a corresponds to the receiving unit described above.

### (Channel switching processing)

The CPU 20e of the remote controller 20 illustrated in Fig. 4 runs the channel switching program 23 and starts the channel switching processing after the supply of electric power to the remote controller 20 is started (e.g., after a battery is set in a battery box).

Fig. 7 is a flowchart illustrating the channel switching processing.

After starting the channel switching processing, in first step S301, the CPU 20e stays on standby until a power supply button (not illustrated) is depressed by the operator in the button input unit 20b. When the power supply button (not illustrated) is depressed by the operator, the CPU 20e advances the processing to step S302.

In step S302, the CPU 20e judges whether the preset information 21 is present in the flash memory unit 20d. When the preset information 21 is not present in the flash memory unit 20d, the CPU 20e branches the processing from step S302 to step S303.

In step S303, the CPU 20e outputs an operation signal for designating switching of a power supply state from the operation signal output unit 20c to the television receiver 30. After the output, the CPU 20e resets the processing to step S301 and thereby returns to a state of staying on standby until the power supply button (not illustrated) is depressed.

On the other hand, when the preset information 21 is present in the flash memory unit 20d in step S302, the CPU 20e advances the processing to step S304.

In step S304, the CPU 20e outputs an operation signal for designating switching of a power supply state and an operation signal for designating switching to a channel specified by the preset information 21 from the operation signal output unit 20c to the television receiver 30. After the output, the CPU 20e resets the processing to step S301 and thereby returns to a state of staying on standby until the power supply button (not illustrated) is depressed.

According to this channel switching processing, when turn-on of a power supply for the television receiver 30 is instructed by the operator through the button input unit 20b, the remote controller 20 judges propriety of switching of a channel based on the instruction and performs operation of the television receiver 30 based on the judgment.

Note that the CPU 20e that executes this channel switching program 23 and the operation signal output unit 20c corresponds to the transmitting unit described above.

### <Action>

In the first embodiment, every time the user views a TV program through the television function by the television software 12 in the own TVPC 10, viewing time of the TV program and channel information of a channel thereof are accumulated in the viewing time management table 121 illustrated in Fig. 3.

The user arranges the own remote controller 20 near the own TVPC 10 (when a communication form between the remote controller 20 and the communication adapter 41 is optical communication, arranges the remote controller 20 and the TVPC 10 such that windows through which communication light passes face each other) and clicks a predetermined button in a screen displayed on the output unit 10a by the user interface module 12a illustrated in Fig. 3. Then, preset information indicating any one of channels is generated as preference information indicating channels with high tendencies of viewing by the user based on the viewing time recorded in the viewing time management table 121 (steps S101, S102, S103; Yes, S105, and S106) and registered in the remote controller 20 (steps S201, S202; Yes, S204, and S205). In other words, a channel with the largest viewing time is specified as a channel with a high tendency of viewing and the preset information 21 indicating the channel is registered in the remote controller 20.

After performing the registration of the preset information 21 described above in advance, the user depresses the power supply button (not illustrated) with the own remote controller 20 directed to the television receiver 30. Then, not only the operation signal for designating switching of a power supply state but also the operation signal for designating switching to a channel specified by the preset information 21 is output to the television receiver 30 (steps S301, S302; Yes, and S304). In other words, in a power-off state, when switching of a power supply state is instructed through the remote controller 20, after shifting the power supply state to an ON state, the television receiver 30 starts output of audio-visual on the channel specified by the preset information 21 recorded in the remote controller 20.

### <Effect>

According to the first embodiment, preference information indicating any one of channels is generated by the TVPC 10 that records history information and passed from the TVPC 10 to the remote controller 20. The remote controller 20 outputs an operation signal based on the preference information (preset information). This operation signal is an operation signal that can be received by any television receiver. Therefore, with the remote controller 20 according to the first embodiment, the preference information can be used in any television receiver 30. A new input/output interface is not necessary for the television receiver 30.

### SECOND EMBODIMENT

A second embodiment is different from the first embodiment in that the number of times of switching of a channel in the TVPC 10 is used as history information. In other words, in the second embodiment, a channel tuned in a large number of times of use is specified as a channel with a high tendency of viewing and the preset information 21 for specifying the channel is registered in the remote controller 20. The second embodiment and the first embodiment are the same in both hardware and software except that details of setting processing for generating this preset information and details of the history information are different. Therefore, according to the second embodiment, only differences from the first embodiment are explained.

### <Configuration>

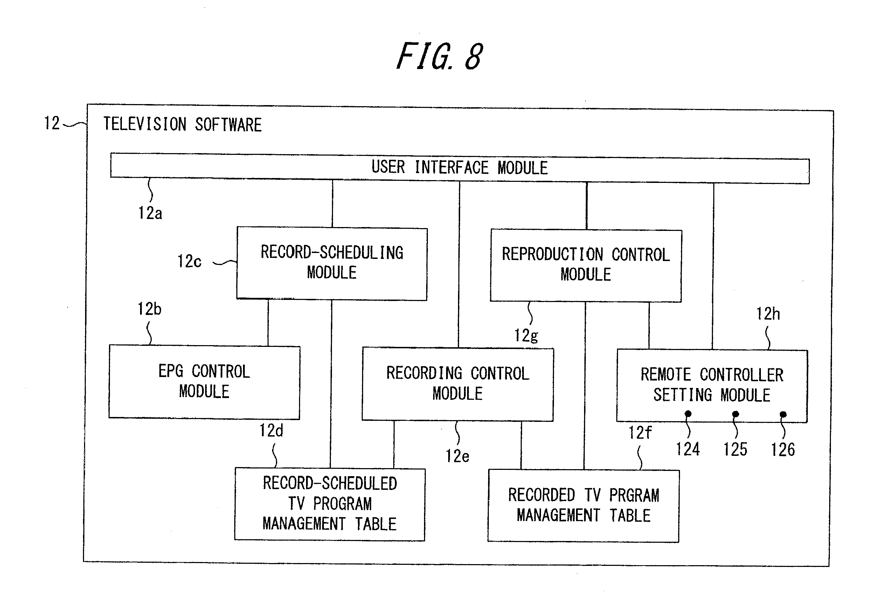

Fig. 8 is a block diagram schematically illustrating a configuration of the television software 12 according to the second embodiment.

The television software 12 according to the second embodiment includes, as in the first embodiment, a remote controller setting module 12i that generates preset information indicating any one of channels and registers the preset information in the remote controller 20. This remote controller setting module 12i includes a channel switching management table 124, a switching recording program 125, and a setting program 126.

The channel switching management table 124 is a table for recording, for each of channels, the number of times where the channel is tuned in as history information. The channel switching management table 124 has the same number of records as the channels. Each of the records has a field in which the number of times of being tuned in about the channel is stored. The number of times of being tuned in for each of channels is periodically initialized to 0. Therefore, only the latest tendency of tuning is stored in the channel switching management table 124.

The switching recording program 125 is a program for executing, after the user interface module 12a receives a channel switching instruction from the operator in a state that audio-visual of any one of the channels are output from the output unit 10a, increment of the number of times of being tuned in about the channel after switching in the channel switching management table 124 by 1.

The setting program 126 is a program for generating preset information indicating any one of the channels in response to an instruction from the operator and registering the preset information in the remote controller 20 as preference information indicating channels with high tendencies of viewing by the user.

### <Processing>

The TVPC 10 according to the second embodiment includes, as in the first embodiment, a predetermined button (not illustrated) on a screen displayed on the output unit 10a by the user interface module 12a illustrated in Fig. 8. When the button is clicked by the operator who operates the input unit 10b, the CPU 10g runs the setting program 126 in the remote controller setting module 12i and thereby starts setting processing.

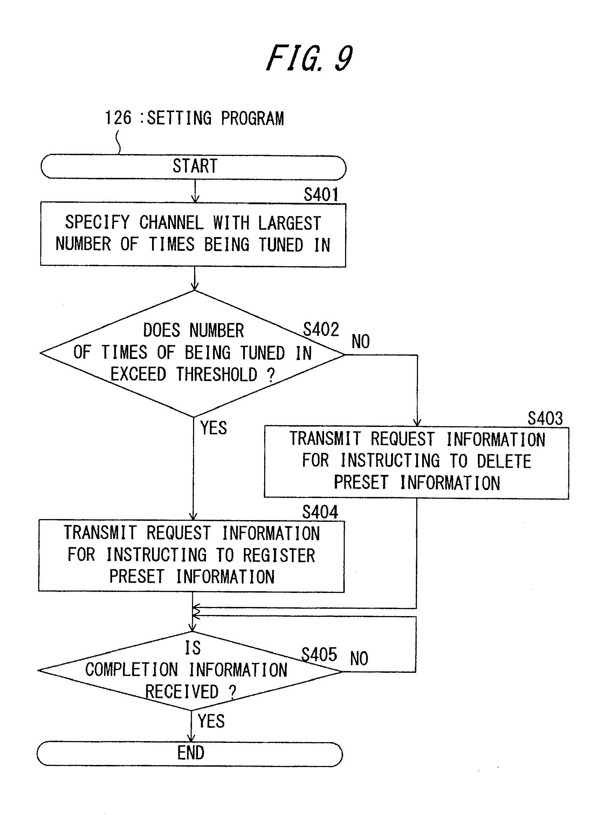

Fig. 9 is a flowchart illustrating the setting processing.

After starting the setting processing, in first step S401, the CPU 10g specifies a channel with the largest number of times of being tuned in among the channels, about which the numbers of times of being tuned in are recorded in the channel switching management table 124 (Fig. 8).

In next step S402, the CPU 10g judges whether the number of times of being tuned in about the channel specified in step S401 exceeds a predetermined threshold. When the number of times of being tuned in does not exceed the predetermined threshold, the CPU 10d branches the processing from step S402 to step S403.

In step S403, the CPU 10g transmits request information for instructing to delete of the preset information 21 to the remote controller 20 through the communication adapter 41. After the transmission, the CPU 10g advances the processing to step S405.

On the other hand, when the number of times of being tuned in about the channel specified in step S401 exceeds the predetermined threshold in step S402, the CPU 10g advances the processing to step S404.

In step S404, the CPU 10g transmits request information for instructing to register channel information of the channel specified in step S401 as preset information to the remote controller 20 through the communication adapter 41. After the transmission, the CPU 10g advances the processing to step S405.

In step S405, the CPU 10g stays on standby until completion information is received from the remote controller 20, which has received the request information in steps S403 or S404, through the communication adapter 41. When the completion information is received, the CPU 10g finishes the setting processing according to Fig. 9. As in the first embodiment, after receiving the completion information, the CPU 10g may display, on the output unit 10a, a dialog box for notifying the operator that the registration of the preset information in the remote controller 20 has been completed. When the completion information cannot be received within a fixed period of time after the request information is transmitted, the CPU 10g may display, on the output unit 10a, a dialog box for notifying the operator that the registration of the preset information has failed, and finish the setting processing according to Fig. 9.

### <Action>

In the second embodiment, when the user switches a channel and tunes in to another channel while viewing a TV program through the television function by the television software 12 in the own TVPC 10, the number of times of being tuned in about a channel corresponding the TV program in the channel switching management table 124 illustrated in Fig. 8 increases by 1. It goes without saying that, if the user performs zapping, the numbers of times of being tuned in about all channels selected by the zapping increase.

The user arranges the own remote controller 20 near the own TVPC 10 (when a communication form between the remote controller 20 and the communication adapter 41 is optical communication, arranges the remote controller 20 and the TVPC 10 such that windows through which communication light passes face each other) and clicks a predetermined button in a screen displayed on the output unit 10a by the user interface module 12a illustrated in Fig. 3. Then, preset information indicating any one of channels is generated as preference information indicating channels with high tendencies of viewing by the user based on the numbers of times of being tuned in recorded in the channel switching management table 124 (steps S401, S402; Yes, S404, and S405), and is registered in the remote controller 20 (steps S201, S202; Yes, S204, and S205). In other words, a channel with the largest number of times of being tuned in is specified as a channel with a high tendency of viewing and the preset information 21 indicating the channel is registered in the remote controller 20.

After performing the registration of the preset information 21 described above in advance, the user depresses the power supply button (not illustrated) with the own remote controller 20 directed to the television receiver 30. Then, as in the first embodiment, not only the operation signal for designating switching of a power supply state but also the operation signal for designating switching to a channel specified by the preset information 21 is output to the television receiver 30 (steps S301, S302; Yes, and S304). In other words, in a power off state, when switching of a power supply state is instructed through the remote controller 20, after shifting the power supply state to an ON state, the television receiver 30 starts output of audio-video on the channel specified by the preset information 21 recorded in the remote controller 20.

### <Effect>

According to the second embodiment, as in the first embodiment, preference information indicating any one of channels is generated by the TVPC 10 that records history information and passed from the TVPC 10 to the remote controller 20. The remote controller 20 outputs an operation signal based on the preference information (preset information). This operation signal is an operation signal that can be received by any television receiver. Therefore, with the remote controller 20 according to the second embodiment, as in the first embodiment, the preference information can be used in any television receiver 30. A new input/output interface is not necessary for the television receiver 30.

### THIRD EMBODIMENT

A third embodiment is different from the first and second embodiments in that preset information is stored in a memory card. In other words, the third embodiment is slightly different from the first and second embodiments in a storage destination and storage processing for the preset information. The third embodiment is identical with the first and second embodiments in other hardware and software. Therefore, concerning the third embodiment, only differences from the first and second embodiments are explained.

### <Configuration>

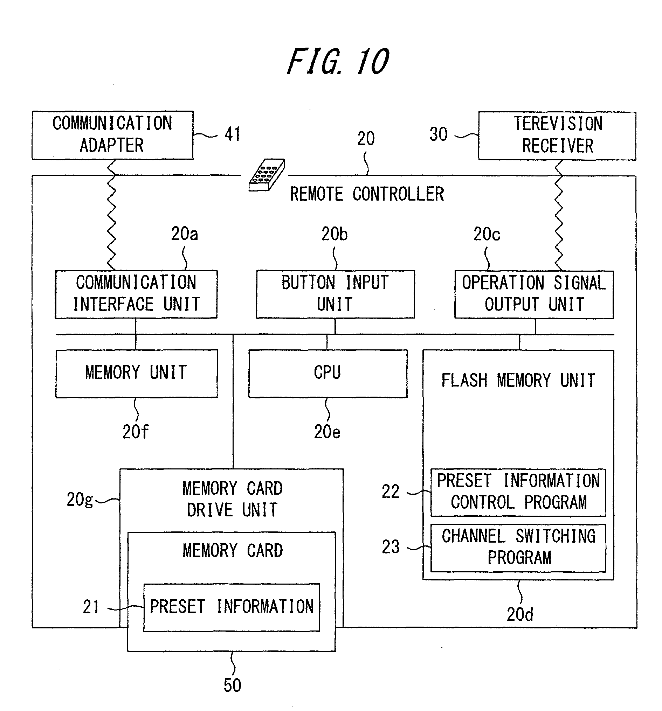

Fig. 10 is a block diagram schematically illustrating a configuration of the remote controller 20 according to the third embodiment.

As illustrated in Fig. 10, the remote controller 20 according to the third embodiment includes, as in the first and second embodiments, the communication interface unit 20a, the button input unit 20b, the operation signal output unit 20c, the flash memory unit 20d, the CPU 20e, and the memory unit 20f.

The remote controller 20 according to the third embodiment further includes a memory card drive unit 20g. The memory card drive unit 20g is a unit that reads data and programs from and writes data and programs in a memory card 50 detachably inserted thereinto. In the third embodiment, the memory card may be a memory card of a unique standard or may be a memory card of a general-purpose standard. As the general-purpose standard, there are, for example, a compact flash (trademark of SunDisk Corporation in the United States), smart media (trademark of Toshiba Corporation), secure digital (SD) card (trademark of SunDisk Corporation in the United States, Matsushita Electric Industrial Co., Ltd., and Toshiba Corporation), a memory stick (trademark of Sony Corporation), and a multimedia card (trademark of Siemens Corporation in the United States and SunDisk Corporation in the United States).

Processing by the preset information control program 22 according to the third embodiment is the same as that illustrated in the flowchart of Fig. 6. The processing is only different from that in the first and second embodiments in that deletion and update of the preset information 21 in steps S203 and S204 are performed on the memory card 50 inserted into the memory card drive unit 20g.

Processing by the channel switching program 23 according to the third embodiment is the same as that illustrated in the flowchart of Fig. 7. The processing is only different from that in the first and second embodiments in that a confirmation destination for presence of the preset information 21 in step S302 is the memory card 50 inserted into the memory card drive unit 20g.

### <Action>

Since the third embodiment is configured as described above, the user can store the preset information 21 (preference information) indicating channels with high tendencies of viewing by the user in the own memory card 50. If the user inserts the own memory card 50 into the remote controller 20, the user can start output of audio-visual on a channel specified by the preset information 21 in the memory card 50 simply by instructing, in the remote controller 20, to operate switching of a power supply state of the television receiver 30 (turn-on of the power supply in a power-off state).

### <Effect>

In the first and second embodiments, since the preset information 21 is stored in the remote controller 20, when users desire to always use channel automatic switching based on the preset information 21 of the users, the users need to own their remote controllers 20, respectively. However, according to the third embodiment, each of the users can store the preset information 21 of the user in the own memory card 50 and thereby own the preset information 21. The preset information 21 used by the remote controller 20 can be easily changed by replacing the memory card 50 of each of the users. Therefore, the users do not have to own their remote controllers 20.

It goes without saying that, with the remote controller 20 according to the third embodiment, as in the first and second embodiments, the preference information can be used in any television receiver 30. A new input/output interface is not necessary for the television receiver 30.

### FOURTH EMBODIMENT

A fourth embodiment is different from the first to third embodiments in that a form of preference information is different. In the first through third embodiments, the preference information is the preset information 21 indicating any one of channels. On the other hand, in the fourth embodiment, the preference information is information indicating a channel for each of several time frames among one or more time frames obtained by dividing time in one day. Differences from the first through third embodiments are explained below.

### <Configuration>

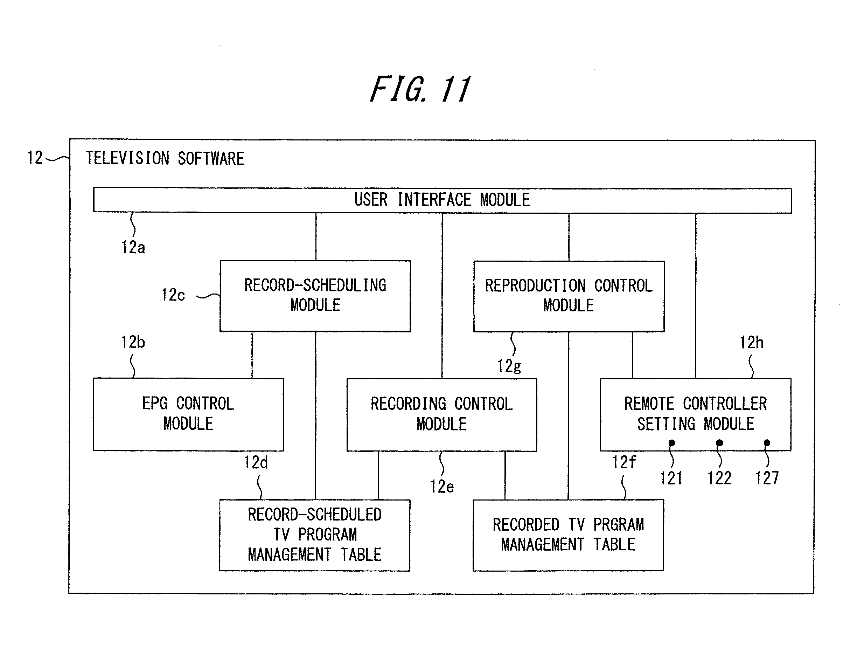

Fig. 11 is a block diagram schematically illustrating a configuration of the television software 12 according to the fourth embodiment.

As illustrated in Fig. 11, as in the first through third embodiments, the television software 12 according to the fourth embodiment includes a remote controller setting module 12j. However, the remote controller setting module 12j according to the fourth embodiment is a module that creates a time frame table described later as preference information and thereby registers the time frame table in the remote controller 20. This remote controller setting module 12j includes the viewing time management table 121, the measurement program 122, and a setting program 127.

The viewing time management table 121 and the measurement program 122 are the same as those in the first embodiment. Therefore, history information that has viewing time and channel information in a way that associates the viewing time and the channel information is accumulated in the viewing time management table 121 as a record. The CPU 10g measures, according to the measurement program 122, viewing time of a channel designated by the operator and records history information of the viewing time in the viewing time management table 121.

It is to be noted that, as in the first embodiment, the CPU 10g that executes this measurement program 122 and the viewing time management table 121 corresponds to the recording unit described above.

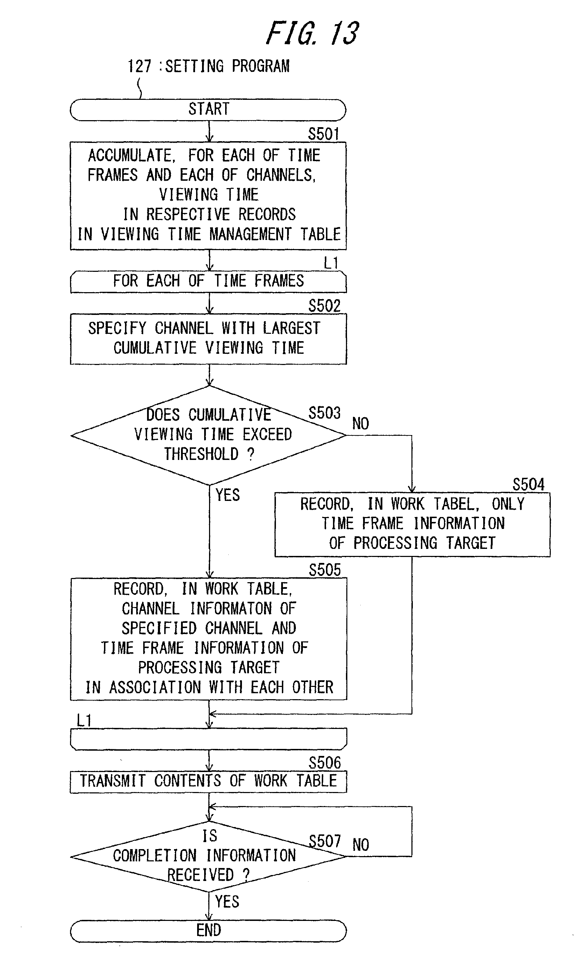

The setting program 127 is a program for creating a time frame table described later in response to an instruction from the operator and registering the time frame table in the remote controller 20 as preference information indicating channels with high tendencies of viewing by the user. Details of setting processing executed by the CPU 10g according to this setting program 127 are described later with reference to Fig. 13.

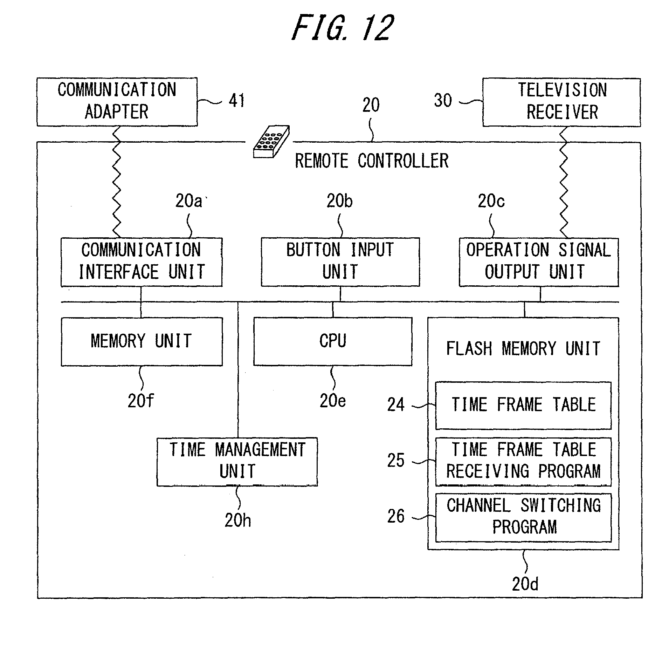

Fig. 12 is a block diagram schematically illustrating a configuration of the remote controller 20.

As illustrated in Fig. 12, the remote controller 20 according to the fourth embodiment includes, as in the first and second embodiments, the communication interface unit 20a, the button input unit 20b, the operation signal output unit 20c, the flash memory unit 20d, the CPU 20e, and the memory unit 20f.

The remote controller 20 according to the fourth embodiment further includes a time management unit 20h. The time management unit 20h is a unit that provides time information in response to requests from other units. This time management unit 20h incorporates a clock and reads time information from this clock. When time setting is instructed by the CPU 20e, the time management unit 20h performs adjustment for setting time of the incorporated clock to a reference time based on reference time information given from the CPU 20e.

In the remote controller 20 according to the fourth embodiment, a time frame table 24, a time frame table receiving program 25, and a channel switching program 26 are stored in the flash memory unit 20d.

The time frame table 24 is a table that specifies a channel for each of several time frames among one or more time frames obtained by dividing time in one day. This time frame table 24 has a plurality of records. Each of the records has a field for storing time frame information indicating a time frame and a field for storing channel information. The time frame table 24 has records, for example, for all of twenty-four time frames obtained by equally dividing time in one day into twenty-four parts. The channel information is stored into only records of time frames in which channels with high tendencies of viewing can be specified among the twenty-four records. Note that the time frame table 24 may be, depending on specifications, a table that does not have records of time frames in which channels cannot be specified.

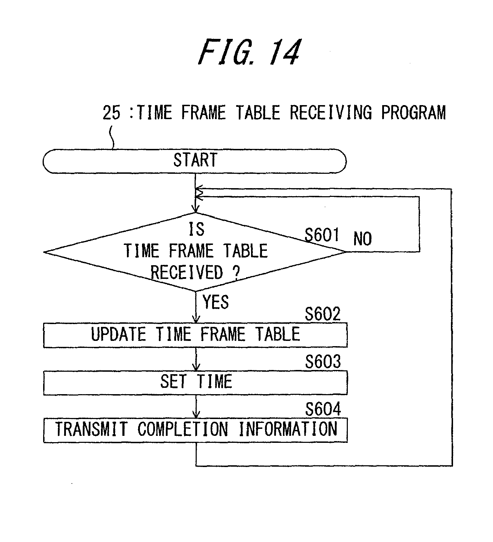

The time frame table receiving program 25 is a program for updating the time frame table 24 in the flash memory unit 20d in cooperation with the remote controller setting module 12j illustrated in Fig. 11. Details of time frame table receiving processing executed by the CPU 20e according to this time frame table receiving program 25 are described later with reference to Fig. 14.

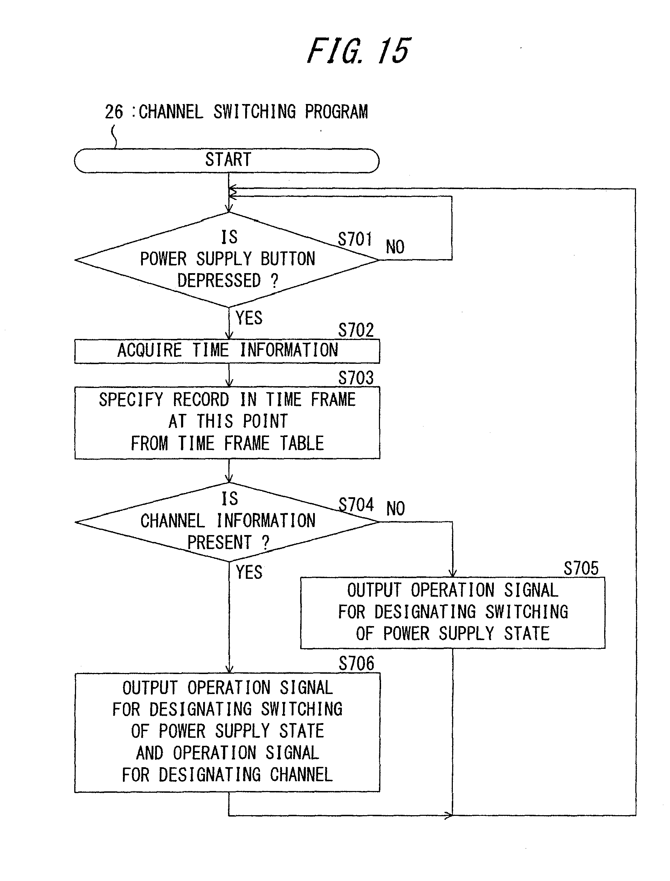

The channel switching program 26 is a program for judging, after switching of a power supply state (turn-on of the power supply in a power-off state) of the television receiver 30 is instructed by the operator through the button input unit 20b, propriety of switching of a channel based on the instruction and performing operation of the television receiver 30 based on the judgment. Details of channel switching processing executed by the CPU 20e according to this channel switching program 26 are described later with reference to Fig. 15.

### <Processing>

### (Setting processing)

The TVPC 10 includes a predetermined button (not illustrated) on a screen displayed on the output unit 10a by the user interface module 12a illustrated in Fig. 11. When the button is clicked by the operator who operates the input unit 10b, the CPU 10g runs the setting program 127 in the remote controller setting module 12j and thereby starts setting processing.

Fig. 13 is a flowchart illustrating the setting processing.

After starting the setting processing, in first step S501, the CPU 10g accumulates, for each of time frames and each of channels, viewing times in the respective records in the viewing time management table 121 (Fig. 11) to thereby calculate cumulative viewing time for each of the time frames and each of the channels. Thereafter, the CPU 10g executes a first processing loop L1.

In the first processing loop L1, the CPU 10g specifies all the time frames in order one by one as a processing target and executes processing from steps S502 through S505 for the time frame specified as the processing target.

In step S502, the CPU 10g specifies a channel having the maximum cumulative viewing time among channels for which cumulative viewing times are calculated for processing target time frames in step S501.

In next step S503, the CPU 10g judges whether the cumulative viewing time of the channel specified in step S502 exceeds a predetermined threshold. When the cumulative viewing time does not exceed the predetermined threshold, the CPU 10d branches the processing from step S503 to step S504.

In step S504, the CPU 10g adds a record not including channel information but including only time frame information of a processing target time frame to a work table created in advance on the memory unit 10h. After adding the record, the CPU 10g finishes this turn of the processing target time frame in the first processing loop L1.

On the other hand, when the cumulative viewing time of the channel specified in step S502 exceeds the predetermined threshold in step S503, the CPU 10g advances the processing to step S505.

In step S505, the CPU 10g adds a record including the channel information of the channel specified in step S502 and the time frame information of the processing target time frame to the work table created in advance on the memory unit 10h. After adding the record, the CPU 10g finishes this turn of the processing target time frame in the first processing loop L1.

When the CPU 10g finishes executing the processing from steps S502 through S505 for all the time frames, the CPU 10g leaves the first processing loop L1 and advances the processing to step S506.

In step S506, the CPU 10g transmits request information for instructing to register contents of the work table on the memory unit 10h as a time frame table to the remote controller 20 through the communication adapter 41. In the fourth embodiment, reference time information used in time setting is included in this request information. After transmitting such request information, the CPU 10g advances the processing to step S507.

In step S507, the CPU 10g stays on standby until completion information is received from the remote controller 20, to which the request information is transmitted in step S506, through the communication adapter 41. When the completion information is received, the CPU 10g finishes the setting processing according to Fig. 13. It is to be noted that, as in the first embodiment, after receiving the completion information, the CPU 10g may display, on the output unit 10a, a dialog box for notifying the operator that the registration of the time frame table in the remote controller 20 has been completed. When the completion information cannot be received within a fixed period of time after the request information is transmitted, the CPU 10g may display, on the output unit 10a, a dialog box for notifying the operator that the registration of the time frame table has failed and finish the setting processing according to Fig. 13.

### (Preset information control processing)

After the power supply for the remote controller 20 is turned on, the CPU 20e of the remote controller 20 illustrated in Fig. 12 runs the time frame table receiving program 25 and thereby starts the time frame table receiving processing.

Fig. 14 is a flowchart illustrating the time frame table receiving processing.

After starting the time frame table receiving processing, in first step S601, the CPU 20e stays on standby until request information is received from the TVPC 10 through the communication interface unit 20a. When the request information is received, the CPU 20e advances the processing to step S602.

In step S602, the CPU 20e updates the time frame table 24 in the flash memory unit 20d with a time frame table included in the request information received in step S201. After the update, the CPU 20e advances the processing to step S603. When the time frame table 24 is not recorded in the flash memory unit 20d, in this step S602, the CPU 20e performs processing for storing the time frame table included in the request information in the flash memory unit 20d and, then, advances the processing to step S603.

In step S603, the CPU 20e gives reference time information included in the request information received in step S201 to the time management unit 20h and instructs the time management unit 20h to perform time setting.

In next step S604, the CPU 20e transmits completion information to the TVPC 10 via the communication interface unit 20a. After the transmission, the CPU 20e resets the processing to step S601 and thereby returns to a state of staying on standby until request information is transmitted from the TVPC 10.

According to this time frame table receiving processing, the remote controller 20 updates the time frame table 24 in the flash memory unit 20d in cooperation with the setting program 123 (Fig. 5) in the remote controller setting module 12h of the TVPC 10.

Note that the CPU 20e that executes this time frame table receiving program 25 and the communication interface unit 20a corresponds to the receiving unit described above.

### (Channel switching processing)

After the supply of electric power to the remote controller 20 is started (e.g., after a battery is set in a battery box), the CPU 20e of the remote controller 20 illustrated in Fig. 12 runs the channel switching program 26 and thereby starts the channel switching processing.

Fig. 15 is a flowchart illustrating the channel switching processing.

After starting the channel switching processing, in first step S701, the CPU 20e stays on standby until a power supply button (not illustrated) is depressed by the operator in the button input unit 20b. When the power supply button (not illustrated) is depressed by the operator, the CPU 20e advances the processing to step S702.

In step S702, the CPU 20e acquires time information from the time management unit 20h.

In next step S703, the CPU 20e specifies, from the time frame table 24 in the flash memory unit 20d, a record of a time frame including time indicated by the time information acquired in step S702.

In next step S704, the CPU 20e judges whether channel information is included in the record specified in step S703. When the channel information is not included in the record, the CPU 20e branches the processing from step S704 to step S705.

In step S705, the CPU 20e outputs an operation signal for designating switching of a power supply state from the operation signal output unit 20c to the television receiver 30. After the output, the CPU 20e resets the processing to step S701 and thereby returns to a state of staying on standby until the power supply button (not illustrated) is depressed.

On the other hand, when, in step S704, the channel information is included in the record specified in step S703, the CPU 20e advances the processing to step S706.

In step S706, the CPU 20e reads the channel information from the record specified in step S703. Thereafter, the CPU 20e outputs an operation signal for designating switching of a power supply state and an operation signal for designating switching to a channel specified by the channel information from the operation signal output unit 20c to the television receiver 30. After the output, the CPU 20e resets the processing to step S701 and thereby returns to a state of staying on standby until the power supply button (not illustrated) is depressed.

According to this channel switching processing, when switching of a power supply state (turn-on of the power supply in a power-off state) of the television receiver 30 is instructed by the operator through the button input unit 20b, the remote controller 20 judges propriety of switching of a channel based on the instruction and performs operation of the television receiver 30 based on the judgment.

Note that the CPU 20e that executes steps S701 through S704 corresponds to the specifying unit described above. The CPU 20e that executes step S706 and the operation signal output unit 20c correspond to the transmitting unit described above.

### <Action>

In the fourth embodiment, every time the user views a TV program through the television function by the television software 12 in the own TVPC 10, viewing time and channel information of a channel of the TV program are accumulated in the viewing time management table 121 illustrated in Fig. 11.

The user arranges the own remote controller 20 near the own TVPC 10 (when a communication form between the remote controller 20 and the communication adapter 41 is optical communication, arranges the remote controller 20 and the TVPC 10 such that windows through which communication light passes face each other) and clicks a predetermined button on a screen displayed on the output unit 10a by the user interface module 12a illustrated in Fig. 11. Then, a time frame table that specifies a channel for each of time frames is generated as preference information indicating channels with high tendencies of viewing in each of the time frames by the user based on the viewing times recorded in the viewing time management table 121 (steps S501 through S505) and registered in the remote controller 20 (steps S601 through S604). In other words, a channel with the largest viewing time in the time frame is specified as a channel with a high tendency of viewing in the time frame and the time frame table 24 that specifies a channel for each of the time frames is registered in the remote controller 20.

After performing the update of the time frame table 24 described above in advance, the user depresses the power supply button (not illustrated) with the own remote controller 20 directed to the television receiver 30. Then, not only the operation signal for designating switching of a power supply state but also the operation signal for designating switching to a channel specified by the time frame table 24 and time at that point is output to the television receiver 30 (steps S701 through S703, S704; Yes, and S705) In other words, when operation for switching of a power supply state (turn-on of the power supply in a power-off state) is instructed through the remote controller 20, the television receiver 30 starts output of audio-visual on the channel specified by the time frame table 24 recorded in the remote controller 20 and the time.

### <Effect>

According to the fourth embodiment, preference information indicating a channel for each of time frames is generated by the TVPC 10 that records history information and passed from the TVPC 10 to the remote controller 20. The remote controller 20 outputs an operation signal based on the preference information (time frame table). This operation signal is an operation signal that can be received by any television receiver. Therefore, with the remote controller 20 according to the fourth embodiment, the preference information can be used in any television receiver 30. A new input/output interface is not necessary for the television receiver 30.

### <Explanation concerning the units>

In the first through fourth embodiments explained above, all the respective units 10a through 10h in the TVPC 10 may be configured by software elements and hardware elements or may be configured by only hardware elements.

As examples of the software elements, an interface program, a driver program, a table, and data, as well as combinations of some of the foregoing can be cited. Those may be software elements stored in a computer readable medium described later or may be firmware fixedly incorporated in storage devices such as a read only memory (ROM) and a large scale integration (LSI).

As examples of the hardware elements, a field programmable gate array (FPGA), an application specific integrated circuit (ASIC), a gate array, a combination of logic gates, a signal processing circuit, an analog circuit, and other circuits can be cited. Among those hardware elements, an AND, an OR, a NOT, a NAND, a NOR, a flip-flop, a counter circuit, and the like of signal values may be included in the logic gate. Circuit elements that execute addition, multiplication, division, inversion, multiply-accumulate, differentiation, integration, and the like of signal values may be included in the signal processing circuit. Circuit elements that execute amplification, addition, multiplication, differentiation, integration, and the like may be included in the analog circuit.

Note that elements configuring the respective units 10a through 10h in the TVPC 10 described above are not limited to those cited as the examples above and may be other elements equivalent to those elements.

In the first through fourth embodiments explained above, the power supply button generally adopted in the remote controller 20 (the button for designating switching of a power supply state of the television receiver 30) is used as the operation button for outputting an operation signal for designating a channel. However, when the remote controller 20 is a remote controller including a button dedicated to turn on the power supply and a button dedicated to turn off the power supply, the button dedicated to turn on the power supply is used as the button for outputting an operation signal for designating a channel.

### <Explanation concerning the software and the program>

In the first through fourth embodiments explained above, all of the TV software 12 in the TVPC 10, the respective modules 12a through 12c, 12e, 12g, and 12h, and the respective tables 12d and 12f configuring this TV software 12, as well as the software elements described above may include elements such as a software component, a component by a procedural language, an object oriented software component, a class component, a component managed as a task, a component managed as a process, a function, an attribute, a procedure, a subroutine (software routine), a fraction or a part of a program code, a driver, firmware, a micro-code, a code, a code segment, an extra segment, a stack segment, a program area, a data area, data, a database, a data structure, a field, a record, a table, a matrix table, an array, a variable, and a parameter.

All of the TV software 12, the respective modules 12a through 12c, 12e, 12g, and 12h and the respective tables 12d and 12f configuring this TV software 12, as well as the software elements described above may be described in the C language, C++, Java (trademark of Sun Microsystems, Inc. in the United States), Visual Basic (trademark of Microsoft Corporation in the United States), Perl, Ruby, and other many programming languages.

Commands, codes, and data included in the TV software 12, the respective modules 12a through 12c, 12e, 12g, and 12h and the respective tables 12d and 12f configuring this TV software 12, as well as the software elements described above may be transmitted or loaded to a computer or a computer incorporated in a machine or an apparatus through a cable network card and a cable network or through a wireless card and a wireless network.

In the transmission or the loading, a data signal is incorporated in, for example, a carrier wave to thereby move on the cable network or the wireless network. However, the data signal may be transferred while keeping a state of a so-called baseband signal without depending on the carrier wave. Such a carrier wave is transmitted in an electric, magnetic, or electromagnetic form, an optical or acoustic form, or other forms.

The cable network or the wireless network is, for example, a telephone line, a network line, a cable (including an optical cable and a metal cable), a wireless link, a cellular phone access line, a personal handyphone system (PHS) network, a wireless local area network (LAN), Bluetooth (trademark of Bluetooth Special Interest Group), a vehicle-mounted radio communication (including dedicated short range communication (DSRC)), and a network including any one of the foregoing. This data signal communicates information including commands, codes, and data to nodes or elements on the network.

Note that elements configuring the TV software 12, the respective modules 12a through 12c, 12e, 12g, and 12h and the respective tables 12d and 12f configuring this TV software 12, as well as the software elements described above are not limited to those cited as the examples above and may be other elements equivalent to those elements.

### <Explanation concerning a computer readable medium>

Any one of the functions in the first through fourth embodiments explained above may be encoded and stored in a storage area of a computer readable medium. In this case, a program that realizes the function can be provided to a computer or a computer incorporated in a machine or an apparatus via this computer readable medium. The computer or the computer incorporated in the machine or the apparatus can realize the function by reading the program from the storage area of the computer readable medium and executing the program.

The computer readable medium refers to a recording medium that accumulates, with an electric, magnetic, optical, chemical, physical, or mechanical action, information such as a program and data and holds the information in a computer readable state.

As examples of the electric or magnetic action, writing of data in an element on a read only memory (ROM) configured by a fuse can be cited. As examples of the magnetic or physical action, development of a latent image on a paper medium by a toner can be cited. Information recorded on the paper medium can be read, for example, optically. As examples of the optical and chemical action, thin film formation or unevenness formation on a substrate can be cited. Information recorded in a form of unevenness can be read, for example, optically. As examples of the chemical action, an oxidation-reduction reaction on a substrate, or oxide film formation, nitride film formation, or a photoresist development on a semiconductor substrate can be cited. As examples of the physical or mechanical action, unevenness formation on an emboss card or perforation in a paper medium by a punch can be cited.

Some of computer readable media can be detachably inserted in a computer or a computer incorporated in a machine or an apparatus. As examples of the detachably attachable computer readable media, a DVD (including a DVD-R, a DVD-RW, a DVD-ROM, and a DVD-RAM), a +R/+WR, a BD (including a BD-R, a BD-RE, and a BD-ROM), a compact disk (CD) (including a CD-R, a CD-RW, and a CD-ROM), a magneto optical (MO) disk, and other optical disk media, a flexible disk (including a floppy disk (floppy is a trademark of Hitachi, Ltd.)), and other magnetic disk media, a memory card (compact flash (trademark of SunDisk Corporation in the United States), smart media (trademark of Toshiba Corporation), an SD card (trademark of SunDisk Corporation in the United States, Matsushita Electric Industrial Co., Ltd., and Toshiba Corporation), a memory stick (trademark of Sony Corporation), an MMC (trademark of Siemens Corporation in the United States and SunDisk Corporation in the United States), etc.), a magnetic tape, and other tape media, as well as a storage device incorporating any one of the foregoing can be cited. In some storage device, a dynamic random access memory (DRAM) or a static random access memory (SRAM) are further incorporated.

Some of the computer readable media are fixedly inserted in a computer or a computer incorporated in a machine or an apparatus. As examples of the computer readable medium of this type, a hard disk, a DRAM, an SRAM, a ROM, an electrically erasable and programmable read only memory (EEPROM), a flash memory, and the like can be cited.

All examples and conditional languages recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relates to a showing of the superiority and inferiority of the invention. Although the embodiments of the present inventions have been described in detail, it should be understood that the various changes, substitutions, and alterations could be made hereto without departing from the spirit and scope of the invention.

Accordingly, with the television system and the remote controller disclosed herein, preference information indicating channels with high tendencies of viewing by a user can be used in any television receiver.

## Claims

1. A television system comprising:
an apparatus including:
a receiving unit that receives a television signal of any one of channels;
an output unit that outputs audio-visual based on the television signal received by the receiving unit;
a switching unit that switches a channel of the television signal received by the receiving unit when an instruction to switch a channel is accepted from an operator;
a recording unit that records history information that has viewing time during which the output unit outputs audio-visual of the channel and channel information indicating the channel in a way that associates the viewing time and the channel information; and
a generating unit that generates, based on the history information recorded by the recording unit, preference information indicating any one of the channels; and
a remote controller including:
a receiving unit that receives the preference information from the apparatus; and
a transmitting unit that transmits, when predetermined operation is received from the operator, an operation signal for designating the channel specified by the preference information received by the receiving unit to a television receiver.

2. The television system according to claim 1,
wherein the generating unit calculates, based on the history information recorded by the recording unit, cumulative viewing time for each of the channels and generates the preference information based on the calculated cumulative viewing time.

3. The television system according to claim 2,
wherein the generating unit generates, when the calculated cumulative viewing time of a channel exceeds a predetermined threshold, preference information indicating the channel.

4. A television system comprising:
an apparatus including:
a receiving unit that receives a television signal of any one of channels;
an output unit that outputs audio-visual based on the television signal received by the receiving unit;
a switching unit that switches a channel of the television signal received by the receiving unit when an instruction to switch a channel is accepted from an operator;
a recording unit that records, for each of the channels, the number of times of tuning in the channel as history information; and
a generating unit that generates, based on the history information recorded by the recording unit, preference information indicating any one of the channels; and
a remote controller including:
a receiving unit that receives the preference information from the apparatus; and
a transmitting unit that transmits, when predetermined operation is received from the operator, an operation signal for designating the channel specified by the preference information received by the receiving unit to a television receiver.

5. The television system according to any one of claims 1 through 4,
wherein the predetermined operation is an instruction to tune on a power supply of the television receiver.

6. The television system according to claim 5,
wherein the apparatus is a computer with a television function.

7. A remote controller comprising:
a receiving unit that receives preference information indicating any one of channels; and
a transmitting unit that transmits, when predetermined operation is received from an operator, an operation signal for designating the channel specified by the preference information received by the receiving unit to a television receiver.

8. The remote controller according to claim 7,
wherein the receiving unit records the received preference information into a recording medium detachably inserted into the remote controller; and
wherein the transmitting unit reads out the preference information from the recording medium when predetermined operation is received from the operator, and transmits an operation signal for designating a channel specified by the read-out preference information to the television receiver.

9. A television system comprising:
an apparatus including:
a receiving unit that receives a television signal of any one of channels;
an output unit that outputs audio-visual based on the television signal received by the receiving unit;
a switching unit that switches a channel of the television signal received by the receiving unit when an instruction to switch a channel is accepted from an operator;
a recording unit that records history information that has viewing time during which the output unit outputs audio-visual of the channel and channel information indicating the channel in a way that associates the viewing time and the channel information; and
a generating unit that generates, based on the history information recorded by the recording unit, preference information indicating a channel for each of several time frames among one or more time frames obtained by dividing time in one day; and
a remote controller including:
a receiving unit that receives the preference information from the apparatus;
a specifying unit that specifies, when predetermined operation is received from the operator, a channel based on the preference information received by the receiving unit and time at that point; and
a transmitting unit that transmits an operation signal for designating the channel specified by the specifying unit to a television receiver.

10. The television system according to claim 9,
wherein the generating unit calculates, based on the history information recorded by the recording unit, cumulative viewing time for each of the one or more time frames obtained by dividing time in one day and for each of the channels and generates the preference information based on the calculated cumulative viewing time.

11. The television system according to claim 10,
wherein the generating unit extracts time frames in which the calculated cumulative viewing time of a channel exceeds a predetermined threshold among a plurality of time frames and generates preference information indicating a channel for each of the extracted time frames.

12. The television system according to any of claims 9 to 11,
wherein the predetermined operation is an instruction to tune on a power supply of the television receiver.

13. The television system according to any of claims 9 to 12,
wherein the apparatus is a computer with a television function.

14. A remote controller comprising:
a receiving unit that receives preference information indicating a channel for each of several time frames among one or more time frames obtained by dividing time in one day;
a specifying unit that specifies, when predetermined operation is received from an operator, a channel based on the preference information received by the receiving unit and time at that point; and
a transmitting unit that transmits an operation signal for designating the channel specified by the specifying unit to a television receiver.
